# EUROPEAN PATENT SPECIFICATION

(11) **EP 2 283 990 B1**
(45) Date of publication and mention of the grant of the patent: **14.03.2012**
(21) Application number: 10172118.1
(22) Date of filing: 06.08.2010
(51) Int. Cl.: B29C 47/58, F04C 2/18, F04C 13/00, F04C 15/00

(54) **Gear pump for viscous media and method**
Getriebepumpe für viskose Medien und Verfahren
Pompe à engrenage pour matériau visqueux et procédé

(30) Priority: 10.08.2009 US 538190
(43) Date of publication of application: 16.02.2011
(73) Proprietor: The Goodyear Tire & Rubber Company, Akron, OH 44316-0001 (US)
(72) Inventor: Endres, Christian, 54675 Koerperich (DE); Burg, Gary Robert, Massillon OH 44646 (US)
(74) Representative: Kutsch, Bernd

(56) References cited:
- EP-A1- 0 812 988
- EP-A2- 1 958 757
- DE-A1- 3 842 988
- US-A- 2 871 794
- US-A- 5 120 206

## Description

### Technical Field

The present invention relates to a gear pump and, in particular, to a gear metering pump for moving a predetermined amount of a compounded elastomeric material from the output of an extruder into a forming die.

### Background of the Invention

Gear pumps are well known and widely used in the plastics and fiber industry. They are generally made by encasing a set of two meshing gears within a close fitting housing having input feed and output discharge ports. The input fluid material fills the spaces between the gear teeth and, as the gears turn, a volume element of the fluid material is trapped between flanks of adjacent gear teeth by close tolerances of the housing and the gear teeth. This volume element is positively transported to the discharge port of the housing by the meshing of the opposing teeth. Thus, conventional gear pumps are identified as positive emplacement devices.

Document US 5,120,206 discloses a gear pump for moving elastomeric material. Document EP 1 058 757 discloses the use of beveled gears in gears pumps.

Conventional gear pumps are generally classified by the services provided, such as metering, pressure boosting, volume transfer etc., as well as by the materials handled, such as polymers, low viscosity liquids, inviscid liquids, etc. Metering and pressure pumps are precision machines with exceedingly small internal clearances. Polymer metering pumps were developed primarily for synthetic fiber extrusion. Transfer pumps tend to have larger clearances for low friction at high RPM and allow fluid to slip or leak back to the feed port if the outlet port is plugged. These conventional gear pumps may include a recycling relief valve to prevent excess pressure build-up.

Most conventional gear pumps are lubricated by the fluid being pumped or transferred therethrough. The need to positively force polymeric fluids through the bearings has been met by several various designs present today in the gear metering pump industry. Some of these conventional metering pumps have gear diameters two or more times the shaft diameters such that a pumping action is created by the twisting action of the gear end face vs. the housing sidewall, providing an effect referred to in the polymer industry as a "necktie" effect. Lubricant flow depends more on clearance, pump speed, and polymer rheology than on pressure, and is thereby self-stabilizing.

Conventional pumps usually are assembled with slightly insufficient clearance so initial sidewall wear is rapid. However, an increased clearance at the gear faces leads to pumping more lubricant so wear rate decreases. Even so, conventional metering pumps are usually removed for cleaning and maintenance every few weeks. Most conventional transfer pumps depend more on internal pressures to force lubricating polymer into the bearings.

Early gear pumps allowed a small lubricant stream to pass through the bearings and leak outside the pump. This was not only undesirable, but became unacceptable with the advent of dangerous fiber spinning solvents and fluids that could seize the pump shaft when they dried or froze. Absolute shaft seals were then developed and pumps were internally ported to return the bearing lubricant to the feed stream.

Conventional gear pumps designed for polymers, especially gear metering pumps, are difficult to disassemble for cleaning and maintenance because parts must be designed for high strength, as well as very tight fit, and usually are held together by the stiff polymer being transferred thereby. Maintenance on these conventional polymer gear metering pumps usually requires various wrenches, mallets, pry-bars, gear puller and arbor presses. Very often a separate or spare pump is required to be maintained to restore production while the other gear pump is taken from the production line for maintenance.

A unique problem encountered in extruding profiles which will then be assembled into tires, is the myriad of different elastomeric compounds which must be used. To avoid contamination of one compound with another, extrusion lines may be cleaned twenty or more times per day. One conventional pump includes a high-molecular weight elastomeric polymer compound, which is very viscous and somewhat elastic, thereby creating extreme extrusion pressures and stresses. Such compound will contain solid reinforcing particles, such as carbon and/or silica, which makes it abrasive and which increases its viscosity. The compound may also contain curatives which make the compound thermosetting (vulcanizing) and scorch sensitive. Upon cessation of shear, the compound may further assume the properties of a solid. These properties make such a compound difficult for use with gear metering pumps.

The recycling of the material being passed through the gear metering pump as the lubricant, is unsatisfactory where the material is such a compounded elastomeric material, due to the above described properties and particularly due to the risk of the compound vulcanizing and plugging the channels and ports through which the lubricating streams are transferred back to the main feed stream. Likewise, lubrication is uncertain in startup, especially when the extrusion head is empty or the amount of initial lubricant is insufficient for proper lubrication of the bearings.

Another problem present in gear metering pumps, especially for metering of compounded elastomeric material, is that the use of a positive seal for the power driven shaft of the meshing gear, as it exits the gear pump housing, creates a substantial heat problem. The creation of such heat is not a problem in extruding most fibers and films but is critical when the material is such a compounded elastomeric material. Control of the temperature of the compound is critical to ensure it is at a high enough temperature for extrusion through the adjacent die, yet not too high to cause partial vulcanization. It has been found that shaft seals can provide as much as 50% of the heat, which is added to the compound being metered by the meshing gears of the pump, thus adding to the heat control problem. Additionally, the rotors may be water cooled for a better temperature control of the compound.

### Summary of the Invention

The invention relates to a gear pump in accordance with claim 1 and a method in accordance with claim 10.

Dependent claims refer to preferred embodiments of the invention.

The second beveled gear is disposed within the chamber. The second beveled gear is rotatably mounted about a second axis of rotation to the housing. The second beveled gear engages the first beveled gear such that rotation of the first beveled gear in a first direction affects rotation of the second beveled gear in a second opposite direction. The first axis of rotation is parallel to the second axis of rotation. The drive mechanism directly drives rotation of the first beveled gear and simultaneously and indirectly drives rotation of the second beveled gear. The rotation of the first and second beveled gears serves to transport elastomeric material from the material inlet to the material outlet.

### Brief Description of the Drawings

A preferred embodiment of the invention, illustrative of the best mode in which applicants have contemplated applying the principles, is set forth in the following description and is shown in the drawings and is particularly and distinctly pointed out and set forth in the appended claims.
FIG. 1 is a schematic view of a conventional viscous media extrusion system containing a gear pump;
FIG. 2 is a schematic perspective view of a gear pump in accordance with the present invention for use with a system such as the system of FIG. 1;
FIG. 3 is a schematic view of a flow of viscous media through gears of the pump of FIG. 2;
FIG. 4 is a sectional view of the pump of FIG. 2; and
FIG. 5 is a sectional view similar to FIG. 4 with the pump shown in an open position.

### Description of an Example Embodiment

A gear pump in accordance with the present invention uses two rotors for polymer transport. The two rotors each have a shaft extending from opposite sides of the gear pump. Each rotor has a bevel gear meshing with the other bevel gear. Preferably, only one rotor is driven for transferring the polymer (e.g. rubber, plastic) from the inlet to the outlet side. The axes of the intermeshing bevel gears are parallel to each other so that the teeth of both bevel gears are inline. Preferably, only one of the bevel gears is actively driven.

Conventional gear shafts with rotors are limited by the amount of possible torque transmission. The shaft diameter is the root of the tooth cavity on the gear face. Increasing the shaft diameter does not increase the strength of the rotor. Further, the conventional gear pump is limited to bending forces on the gears, pressures, etc. that restrict the throughput of the pump for newer, tougher and harder compounds. The shaft diameter of the bevel gear is much larger than the diameter of conventional shafts. As a consequence, bevel gears may transmit higher torque loads. More and more, high viscous media are used, thereby pushing conventional two rotor gear pumps to their limits and above. The beveled gears of a gear pump in accordance with the present invention may thus allow processing of high viscous media without maxing out on torque limitations.

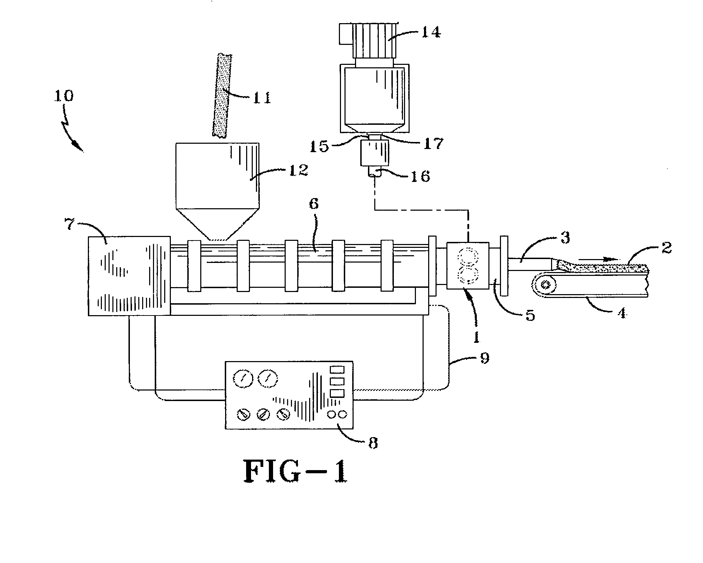

FIG. 1 illustrates an example extrusion system 10 for producing accurately profiled strips 2 of an extruded elastomeric compound, which after leaving an extrusion die 3, are carried by a power driven conveyor 4 for cooling and transfer to storage or a work station. A gear pump 1 in accordance with the present invention may be mounted between the inlet of an extrusion head 5 and the outlet of a feed extruder 6. The feed extruder 6 may have various designs and configurations, but may generally consist of a hollow barrel having an internal feed screw revolved by a power driven transmission assembly 7.

Various temperatures and pressures within the feed extruder 6 may be monitored and controlled at an appropriate control panel 8 through various communication lines 9. Elastomeric compound 11 may be fed into the feed extruder 6 through an input chute 12 where the compound 11 is heated and mixed while moving along the feed extruder 6, prior to being discharged into the gear pump 1.

The gear pump 1 may be driven by an electric motor 14 having a drive shaft 15 coupled to an input shaft 16 through a drive coupling 17. The motor 14 and drive coupling 17 are shown in a broken away and 90 degree oriented position in FIG. 1 for clarity.

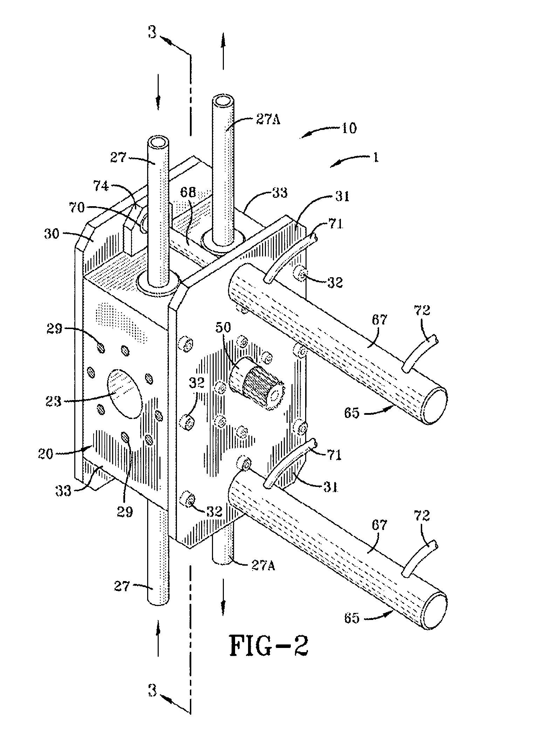

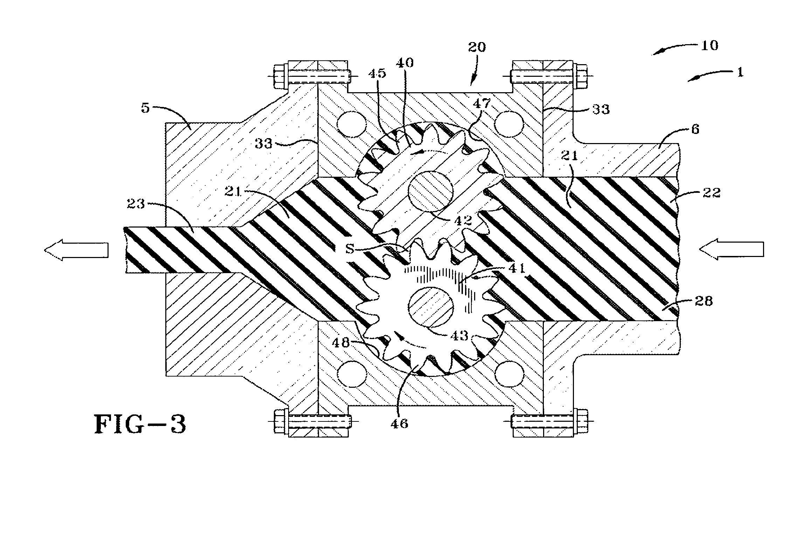

The various components of the example extrusion system 10 may vary without affecting the scope of the present invention and are illustrative of only one type of system for use with the improved gear pump 1 in accordance with the present invention. The gear pump 1, as shown more particularly in FIGS. 2-5, may include a main housing 20 having a hollow interior or chamber 21 (FIG. 3). An inlet port 22 and an exit or discharge port 23 are formed in ends of the housing 20 and communicate with the chamber 21. Various fluid cavities 25, 26 may be formed in housing 20 for circulating cooling or heating fluid throughout the housing. This cooling/heating fluid may enter through a plurality of feed lines 27 and may exit through discharge lines 27A. The fluid will either heat or cool the compound 28 being transported by the gear pump 1 (FIG. 2) in order to maintain the compound at a desired temperature for facilitating movement through the gear pump and preventing the compound from exceeding an upper temperature limit (i.e., vulcanization temperature). A plurality of bolt receiving holes 29 may be formed in opposed end faces 33 of housing 20 for connecting the gear pump 1 to the feed extruder 6 and to the extrusion head 5.

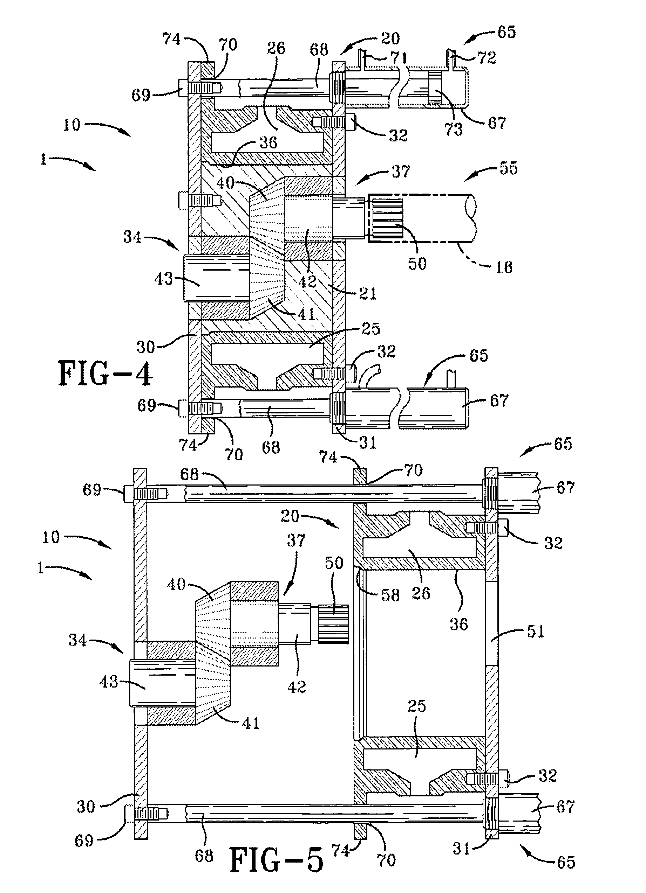

A first side plate 30 may be removably mounted on one side of the housing 20 for closing a side of the chamber 21. The first side plate 30 may be formed of steel, and have a sufficient thickness to hold a bearing assembly firmly in position. The opposite side of chamber 21 may be closed by a second side plate 31, which is secured to the housing 20 by a plurality of mounting bolts 32 (FIGS. 4-5). A sleeve or roller bearing assembly 34 consisting of a sleeve bearing may be secured within the first side plate 30 by a plurality of bolts so as to be removed with the first side plate when it is separated from the housing 20. A sleeve or roller similar bearing assembly 37 consisting of a sleeve bearing may be mounted secured within the second side plate 31.

A pair of meshing beveled gears 40, 41 may be rotatably mounted in chamber 21 by parallel and oppositely extending shafts 42, 43, respectively. The beveled gears 40, 41 may be secured to the bearing assemblies 34, 37 for rotation within the sleeve bearings, as shown particularly in FIGS. 4-5. A plurality of gear teeth 45, 46 may be in meshing engagement for the metered movement of the compound 28 (FIG. 3). The beveled gears 40, 41 may be water cooled or fluid tempered for controlling temperature during operation of the gear pump 1.

Referring to FIG. 3, as gears 40, 41 rotate, the space between adjacent teeth 45, 46 fills with the compound 28 entering the chamber 21 by the inlet port 22. As the gears 40, 41 continue to rotate, the compound 28 is confined by arcuate inner surfaces 47, 48 which define a portion of the chamber 21, until the compound reaches the discharge port 23. Thus, the teeth 45, 46 of the gears 40, 41 mesh and force the compound 28 through the outlet opening 23 and into the extrusion head 5.

The upper gear shaft 42 may include an extended end 50 (FIGS. 4-5) having coupling teeth formed thereon, for drivingly coupling the gear shaft to a coupler shaft 16 (shown in phantom lines in FIG. 4), for positively driving the upper gear shaft 42 by the electric motor 14, which in turn drives driven shaft 43, through the meshing of the gear teeth 45, 46. Further, the drive shaft may alternatively be the shaft 43 of the lower gear 41 without affecting the concept of the present invention. Additionally, both shafts 42, 43 may be directly driven for extremely viscous compounds.

An opening 51 is formed in the second side plate 31 enabling the upper gear shaft 42 and the end 50 thereof, to pass therethrough without the use of any positive external seal. The elimination of such an end seal may considerably reduce the amount of heat generated, which would have been imparted to the compound 28 as it flows through the chamber 21.

A plurality of power actuated pusher/puller means 65 may be mounted on the second side plate 31 and may be operatively connected to the first side plate 30 for removing the first side plate, one of the bearing assemblies 34, 37, and/or the beveled gears 41, 42 from within the housing 20 (FIGS. 4-5). Each pusher/puller means 65 may be a hydraulic cylinder 67 securely mounted on the second side plate 31 with a piston rod 68 extending outwardly from the hydraulic cylinder. The piston rod 68 may be connected to the first side plate 30 by a bolt 69. The piston rods 68 may extend through sleeve bearings 70 mounted in housing extensions 74 to stabilize movement of the first side plate 30 with respect to the housing 20. A pair of fluid lines 71, 72 may communicate with each cylinder 67 and provide a flow of hydraulic fluid to both sides of an internal piston 73 for positively moving piston rod 68 in both opening and closing directions.

Thus, the first side plate 30 may be removed easily and automatically from the housing 20 by the simultaneous actuation of pistons 73 by the introduction of fluid through lines 72, which will move piston rods 68 and the connected first side plate 30 to the open position (FIG. 5). Movement of the first side plate 30 may carry along the beveled gears 41, 42 and bearing sleeves 34, 37, automatically removing the gears and bearing sleeves from within the chamber 21 of the housing 20. This may enable the compound 28 to be removed easily, generally manually by a worker, from within the chamber 21, and thereby enables the beveled gears 41, 42 to be readily cleaned.

Introduction of pressurized fluid into the cylinders 67 through lines 71 may move the piston rods 68 and the connected first side plate 30, together with the beveled gears 41, 42 and bearing assemblies 34, 37 from the open position of FIG. 5 to the closed position of FIG. 4. Then the shaft end 50 may be reconnected either manually or automatically to the coupler shaft 16 to complete the driving connection with a power drive source such as the electric drive motor 14. An annular chamfer 58 (FIG. 5) may be formed about a side opening 36 to serve as a guide for slidably receiving the beveled gears 40, 41 within the chamber 21.

The pusher/puller means 65 may be the two or more hydraulic cylinders discussed above, and may be synchronized by known equipment for driving two or more interconnected hydraulic pumps from a common motor and multiple stream metering valves. In order to avoid cocking during pulling and pushing of the beveled gears 40, 41 because of tight tolerances, a source of hydraulic power may be supplied by a twin metering gear pump providing equal amounts of hydraulic fluid to each cylinder from separate constant displacement pumps. However, for holding the first side plate 30 in the closed position, the hydraulic fluid may be valved to a conventional hydraulic supply for reducing usage of precision pumps. Further, mechanical screw jacks may replace the hydraulic cylinders and be driven in unison by a common chain or synchronous motors fed by a common inverter to ensure simultaneous, uniform movement thereof for moving the first plate 30 from the housing 20.

## Claims

1. A gear pump for moving elastomeric material, the gear pump (1) comprising:
a housing (20) having first and second side plates (30, 31), an internal gear chamber (21), a material inlet (22) communicating with the chamber (21), and a material outlet (23) communicating with the chamber (21);
a first gear (40) disposed within the chamber (21), the first gear (40) being rotatably mounted about a first axis of rotation to the housing (20);
a second gear (41) disposed within the chamber (21), the second gear (41) being rotatably mounted about a second axis of rotation to the housing (20), the second gear (41) engaging the first gear (40) such that rotation of the first gear (40) in a first direction affects rotation of the second gear (41) in a second opposite direction, the first axis of rotation (42) being parallel to the second axis of rotation (43); and
a mechanism for directly driving rotation of the first gear (40) and simultaneously and indirectly driving rotation of the second gear (41), **characterized in that** the first and second gears (40,41) are beveled gears.

2. The gear pump of claim 1 wherein a rotation of the first and second beveled gears (40, 41) transports elastomeric material from the material inlet (22) to the material outlet (23) when the gear pump (1) is in use.

3. The gear pump of claim 1 further comprising a first and a second bearing assembly (34, 37) secured at least to the respective first and second side plate (30, 31) of the housing (20) for rotatably mounting the first and second beveled gears (40, 41) within the chamber (21).

4. The gear pump of at least one of the previous claims, further comprising a cylinder (67) mounted to the housing (20) for allowing external access to the chamber (21).

5. The gear pump of claim 4 wherein the cylinder (67) is a hydraulic or fluid pressure cylinder.

6. The gear pump of at least one of the previous claims wherein the first beveled gear (40) is rotatable about a first shaft (42) and the second beveled gear (41) is rotatable about a second shaft (43), the first shaft (42) being rotatably mounted to the first side plate (31) of the housing (20) and the second shaft (43) being rotatably mounted to the second side plate (30) of the housing (20).

7. The gear pump of claim 6 wherein the first side plate (31) is disposed on an opposite side of the housing (20) from the second side plate (30).

8. The gear pump of at least one of the previous claims wherein the first shaft (42) is a drive shaft operatively connected to the mechanism for positively rotating the first shaft (42).

9. The gear pump of claim 8 wherein the second shaft (43) is an idler shaft driven by the first shaft (42) through the meshing of the first and second beveled gears (40, 41).

10. A method of moving a predetermined amount of compounded elastomeric material (11) from an output of an extruder (6) into a forming die (3), the method comprising using a gear pump (1) of one of the previous claims.

11. The method of claim 10 wherein the gear pump (1) is applied between the output of the extruder (6) and the forming die (3).

## Patentansprüche

1. Zahnradpumpe zum Bewegen von Elastomermaterial, wobei die Zahnradpumpe (1) umfasst:
ein Gehäuse (20) mit einer ersten und einer zweiten Seitenplatte (30, 31), einer inneren Getriebekammer (21), einem mit der Kammer (21) in Verbindung stehenden Materialeinlass (22) und einem mit der Kammer (21) in Verbindung stehenden Materialauslass (23);
ein in der Kammer (21) angeordnetes erstes Zahnrad (40), wobei das erste Zahnrad (40) um eine erste Rotationsachse rotierbar an dem Gehäuse (20) montiert ist;
ein in der Kammer (21) angeordnetes zweites Zahnrad (41), wobei das zweite Zahnrad (40) um eine zweite Rotationsachse rotierbar an dem Gehäuse (20) montiert ist, wobei das zweite Zahnrad (41) mit dem ersten Zahnrad (40) so in Eingriff ist, dass eine Rotation des ersten Zahnrads (40) in einer ersten Richtung die Rotation des zweiten Zahnrads (41) in einer zweiten entgegengesetzten Richtung bewirkt, wobei die erste Rotationsachse (42) parallel zu der zweiten Rotationsachse (43) ist; und
einen Mechanismus zum direkt Antreiben der Rotation des ersten Zahnrads (40) und gleichzeitig und indirekt Antreiben der Rotation des zweiten Zahnrads (41),
**dadurch gekennzeichnet, dass** das erste und das zweite Zahnrad (40, 41) Kegelräder sind.

2. Zahnradpumpe nach Anspruch 1, wobei eine Rotation des ersten und des zweiten Kegelrads (40, 41) Elastomermaterial von dem Materialeinlass (22) zu dem Materialauslass (23) befördert, wenn die Zahnradpumpe (1) in Gebrauch ist.

3. Zahnradpumpe nach Anspruch 1, weiter eine erste und eine zweite Lagerbaugruppe (34, 37) umfassend, die mindestens an der ersten beziehungsweise zweiten Seitenplatte (30, 31) des Gehäuses (20) befestigt sind, um das erste und zweite Kegelrad (40, 41) rotierbar innerhalb der Kammer (21) zu montieren.

4. Zahnradpumpe nach mindestens einem der vorgenannten Ansprüche, weiter einen an dem Gehäuse (20) montierten Zylinder (67) zur Gewährung externen Zugangs zu der Kammer (21) umfassend.

5. Zahnradpumpe nach Anspruch 4, wobei der Zylinder (67) ein Hydraulik- oder Fluiddruckzylinder ist.

6. Zahnradpumpe nach mindestens einem der vorgenannten Ansprüche, wobei das erste Kegelrad (40) um eine erste Welle (42) rotierbar ist und das zweite Kegelrad (41) um eine zweite Welle (43) rotierbar ist, wobei die erste Welle (42) rotierbar an der ersten Seitenplatte (31) des Gehäuses (20) montiert ist und die zweite Welle (43) rotierbar an der zweiten Seitenplatte (30) des Gehäuses (20) montiert ist.

7. Zahnradpumpe nach Anspruch 6, wobei die erste Seitenplatte (31) an einer zu der zweiten Seitenplatte (30) entgegengesetzten Seite des Gehäuses (20) angeordnet ist.

8. Zahnradpumpe nach mindestens einem der vorgenannten Ansprüche, wobei die erste Welle (42) eine Antriebswelle ist, die zum Zwangsrotieren der ersten Welle (42) wirksam mit dem Mechanismus verbunden ist.

9. Zahnradpumpe nach Anspruch 8, wobei die zweite Welle (43) eine von der ersten Welle (42) durch den Eingriff des ersten und des zweiten Kegelrades (40, 41) angetriebene Laufwelle ist.

10. Verfahren zum Bewegen einer vorbestimmten Menge eines compoundierten Elastomermaterials (11) von einem Auslass eines Extruders (6) in ein Formmundstück (3), wobei das Verfahren die Verwendung einer Zahnradpumpe (1) nach einem der vorgenannten Ansprüche umfasst.

11. Verfahren nach Anspruch 10, wobei die Zahnradpumpe (1) zwischen dem Auslass des Extruders (6) und dem Formmundstück (3) angewendet wird.

## Revendications

1. Pompe à engrenages pour déplacer une matière élastomère, la pompe à engrenages (1) comprenant les pneus comprenant :
un boîtier (20) possédant une première et une deuxième plaque latérale (31), une chambre d'engrenages interne (21), une entrée de matière (22) communiquant avec la chambre (21) et une sortie de matière (23) communiquant avec la chambre (21) ;
un premier engrenage (40) qui est disposé à l'intérieur de la chambre (21), le premier engrenage (40) étant monté en rotation autour d'un premier axe de rotation au boîtier (20) ;
un deuxième engrenage (41) qui est disposé à l'intérieur de la chambre (21), le deuxième engrenage (41) étant monté en rotation autour d'un deuxième axe de rotation au boîtier (20), le deuxième engrenage (41) venant s'engrener avec le premier engrenage (40) de telle sorte que la rotation du premier engrenage (40) dans une première direction affecte la rotation du deuxième engrenage (41) dans une deuxième direction opposée, le premier axe de rotation (42) étant parallèle au deuxième axe de rotation (43) ; et
un mécanisme pour entraîner directement en rotation le premier engrenage (40) et de manière simultanée entraîner en rotation de manière indirecte le deuxième engrenage (41) ;
**caractérisée en ce que** le premier et le deuxième engrenage (40, 41) sont des engrenages chanfreinés.

2. Pompe à engrenages selon la revendication 1, dans lequel la rotation du premier et du deuxième engrenage chanfreiné (40, 41) transporte une matière élastomère à partir de l'entrée de matière (22) en direction de la sortie de matière (23) lorsque la pompe à engrenages (1) est mise en service.

3. Pompe à engrenages selon la revendication 1, comprenant en outre un premier et un deuxième assemblage de palier (34, 37) fixés au moins à la première et à la deuxième plaque latérale respective (30, 31) du boîtier (20) pour le montage en rotation du premier et du deuxième engrenage chanfreiné (40, 41) à l'intérieur de la chambre (21).

4. Pompe à engrenages selon au moins une des revendications précédentes, comprenant en outre un cylindre (67) monté sur le boîtier (20) pour permettre un accès externe à la chambre (21).

5. Pompe à engrenages selon la revendication 4, dans laquelle le cylindre (67) est un cylindre de pression hydraulique ou par fluide.

6. Pompe à engrenages selon au moins une des revendications précédentes, dans laquelle le premier engrenage chanfreiné (40) est rotatif autour d'un premier arbre (42) et le deuxième engrenage chanfreiné (41) est rotatif autour d'un deuxième arbre (43), le premier arbre (42) étant monté en rotation sur la première plaque latérale (31) du boîtier (20) et le deuxième arbre (43) étant monté en rotation sur la deuxième plaque latérale (30) du boîtier (20).

7. Pompe à engrenages selon la revendication 6, dans laquelle la première plaque latérale (31) est disposée sur le côté opposé du boîtier (20) par rapport à la deuxième plaque latérale (30).

8. Pompe à engrenages selon au moins une des revendications précédentes, dans laquelle le premier arbre (42) est un arbre d'entraînement relié de manière opérante au mécanisme pour la rotation mécanique du premier arbre (42).

9. Pompe à engrenages selon la revendication 8, dans laquelle le deuxième arbre (43) est un arbre mené entraîné par le premier arbre (42) via l'engrenage des premier et deuxième engrenages chanfreinés (40, 41).

10. Procédé de déplacement d'une quantité prédéterminée d'une matière élastomère mélangée (11) à partir de la sortie d'une extrudeuse (6) jusque dans une filière comprenant l'utilisation d'une pompe à engrenages (1) selon l'une quelconque des revendications précédentes.

11. Procédé selon la revendication 10, dans lequel la pompe à engrenages (1) est appliquée entre la sortie de l'extrudeuse (6) et la filière (3).
